# EUROPÄISCHE PATENTANMELDUNG

(11) **EP 2 020 518 A1**
(43) Veröffentlichungstag der Anmeldung: **04.02.2009**
(21) Anmeldenummer: 07014938.0
(22) Anmeldetag: 30.07.2007
(51) Int. Cl.: F16D 27/105

(54) **Schlingfederkupplung**

(71) Anmelder: Hoerbiger Antriebstechnik GmbH, 86956 Schongau (DE)
(72) Erfinder: Nickel, Falk, 86925 Fuchstal (DE); Oswald, Johann, 82438 Eschenlohe (DE); Ackermann, Jürgen, Dr., 86875 Waal (DE); Sielaff, Tilo, 86971 Peiting (DE)
(74) Vertreter: Schmitz, Hans-Werner

(57) **Zusammenfassung**

Die Erfindung betrifft eine Schlingfederkupplung (10) mit einer ersten Welle (4), mit einer Schlingfeder (3), die um die erste Welle (4) in einer Wickelrichtung herumgewickelt ist und zwei Schlingfederenden (7, 8) sowie eine Anlagefläche (12) zum Zusammenwirken mit einer Reibfläche (13) aufweist; und mit einer zweiten hohlen Welle (1), die konzentrisch zur ersten Welle (4) um die Schlingfeder (3) herum angeordnet ist; gekennzeichnet durch einen Aktuator (2) zur Aufbringung einer geregelten Tangentialkraft auf zumindest eines der Schlingfederenden (7, 8) entgegen der Wickelrichtung der Schlingfeder (3) und eine Ölumlaufschmierung (11), die eine Ölpumpe (16) aufweist, die der Anlagefläche (12) und der Reibfläche (13) über einen Ölkreislauf (17) Kühlöl zuführt und erwärmtes Kühlöl abführt.

## Beschreibung

Die Erfindung betrifft eine Schlingfederkupplung gemäß dem Oberbegriff des Anspruches 1.

Im Zuge der Automatisierung und elektronischen Regelung von Antrieben für Maschinen und Kraftfahrzeuge hat die Bedeutung von Kupplungen mit entsprechenden Eigenschaften zugenommen. Die Kernanforderungen sind eine hohe Drehmomentvariabilität, kurze Reaktionszeit, kleiner Bauraum, geringer Aufwand und Energiebedarf des Kupplungsaktuators, hohe Zuverlässigkeit und möglichst konstantes Verhalten über den gesamten Lebensdauerzyklus. Zur Anwendung kommen heute vor allem Lamellenkupplungen mit unterschiedlichen Aktuatorsystemen. Diese können elektrisch, elektro-hydraulisch, pneumatisch, mechanisch oder mit MRF/ERF ausgeführt sein. Bei den bekannten Systemen ist der Aufwand mit zunehmendem Drehmomentbedarf sowohl für den übertragenden Teil als auch das Aktuatorsystem hoch. Die Integration des Systems ist zunehmend schwieriger und die Kosten hierfür steigen.

Eine allgemein bekannte dem Oberbegriff des Anspruches 1 entsprechende Schlingfederkupplung (US-A-4,250,984) ist als passives Element, z.B. als Drehmomentbegrenzer, oder als aktives Element in Ausführungen eingesetzt worden, die jedoch nur eine An-/Aus-Funktion haben. Üblicherweise werden derartige Schlingfederkupplungen mit einer Fettschmierung versehen, welche die Kupplung über die gesamte Lebensdauer schmiert. Bei der genannten reinen An-/Aus-Funktion war eine derartige Schmierung auch ausreichend, da die anfallende Reibwärme durch die kurzen Schlupfzeiten nur sehr gering ist. Soll eine Schlingfederkupplung jedoch geregelt ausgeführt werden, ist eine permanente Kühlung des Systems erforderlich. Es wäre hierfür zwar generell denkbar, die Reibpartner der Kupplung in einem Ölbad laufen zu lassen (wie dies beispielsweise bei Reibkupplungen in Lamellenbauweise der Fall ist), jedoch haben im Rahmen der Erfindung durchgeführte Untersuchungen ergeben, dass eine derartige Kühlung, insbesondere bei hoch belasteten Schlingfederkupplungen, keine ausreichende Kühlwirkung hätte.

Es ist daher Aufgabe der vorliegenden Erfindung, eine Schlingfederkupplung der im Oberbegriff des Anspruches 1 angegebenen Art zu schaffen, die eine regelbare Drehmomentübertragung bei ausreichender Kühlung der Reibpartner ermöglicht.

Die Lösung dieser Aufgabe erfolgt durch die Merkmale des Anspruchs 1.

Erfindungsgemäß ist vorgesehen, dass die Schlingfeder bzw. das gesamt Reibsystem der erfindungsgemäßen Schlingfederkupplung aktiv über eine Ölumlaufschmierung geschmiert wird. Das Öl kann hierbei an einem Ende der Schlingfederkupplung eintreten, nimmt über das Vorbeifließen an der Schlingfeder und den Reib- und Anlageflächen Wärme auf und verlässt die Kupplung in erwärmtem Zustand wieder. Da sich bei einem Drehrichtungswechsel die Enden der Schlingfeder mit der höheren Belastung vertauschen, ist es ferner möglich, die Flussrichtung des Öls im Bedarfsfalle umzukehren.

Eine dritte Möglichkeit ist die Einbringung des Öls in die Kupplung in der Mitte der Schlingfeder. In diesem Fall verlässt das Öl die Kupplung dann an beiden Seiten der Schlingfeder gleichmäßig.

Die Unteransprüche haben vorteilhafte Weiterbildungen der Erfindung zum Inhalt.

Weitere Einzelheiten, Vorteile und Merkmale der Erfindung ergeben sich aus nachfolgender Beschreibung einer Ausführungsform anhand der Zeichnung. Es zeigt:
- Fig. 1: eine stark schematisch vereinfachte Stirnansicht des generellen Aufbaues einer Schlingfederkupplung,
- Fig. 2: eine schematisch stark vereinfachte Stirnansicht einer erfindungsgemäßen Schlingfederkupplung,
- Fig. 3: eine ebenfalls schematisch stark vereinfachte Seitenansicht der Schlingfederkupplung gemäß Fig. 2,
- Fig. 4: einen vergrößerten und schematisch vereinfacht dargestellten Ausschnitt der erfindungsgemäßen Schlingfederkupplung gemäß den Fign. 2 und 3 zur Darstellung einer erfindungsgemäßen Ölumlaufschmierung, und
- Fign. 5 bis 7: der Fig. 4 entsprechende Darstellungen der erfindungsgemäßen Schlingfederkupplung zur Verdeutlichung unterschiedlicher Öldurchflussrichtungen.

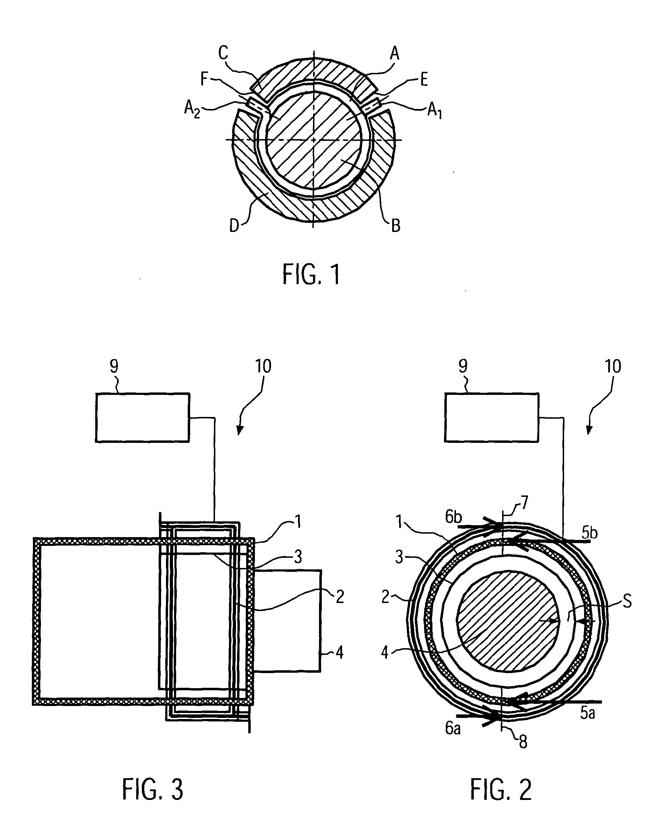

In Fig. 1 ist zur Erläuterung eines generell möglichen Aufbaues einer Schlingfederkupplung eine Schlingfeder A dargestellt, die mit Vorspannung auf einer fixierten Achse B angeordnet ist. An den beiden in oder durch Ausnehmungen E und F ragenden Federenden A1 und A2 greift je nach Drehrichtung ein Segment C eines Antriebsteils an. Bei Last am Abtrieb wird durch Formschluss über das jeweilige Federende A1 bzw. A2 und ein Segment D mitgedreht. Entsteht am Abtrieb ein Drehmoment, welches den Antrieb überholen will, blockiert das Segment D über das jeweilige Federende A1 bzw. A2 der Schlingfeder A.

Dieses System bedingt ein minimales Spiel zwischen den Flanken der Segmente C und D und den Federenden A1 und A2 und ist drehrichtungsunabhängig. Die Wicklungsrichtung der Schlingfeder A hat ebenfalls keinen Einfluss auf die Funktion.

Anstelle einer fixierten Achse B kann ein entsprechender Aufbau in einer in Fig. 1 nicht näher dargestellten Hülse in einem Gehäuse vorgesehen sein. Die Enden A1 und A2 der Schlingfeder A sind dann entsprechend nach innen gebogen.

Die in den Fig. 2 und 3 dargestellte Schlingfederkupplung 10 weist eine erste Welle (Federträger) 4 auf, die von einer Schlingfeder 3 umgeben ist, wobei die Schlingfeder 3 in einer definierten Wickelrichtung um die erste Welle 4 herum gewickelt ist und zwei sich im Beispielsfalle in entgegengesetzter Richtung radial erstreckende Schlingfederenden 7 und 8 aufweist.

Ferner weist die Schlingfederkupplung 1 eine zweite hohle Welle (Trommel) 1 auf, die konzentrisch zur ersten Welle 4 um die Schlingfeder 3 herum angeordnet ist. Diese zweite Welle 1 weist bei der dargestellten Ausführungsform eine in der Zeichnung aufgrund der schematischen Vereinfachung nicht näher dargestellte Ausnehmung auf, so dass die zweite Welle 1 nur in Wickelrichtung der Schlingfeder 3 gegen die radialen Schlingfederenden 7 und 8 stoßen kann.

Die erfindungsgemäße Schlingfederkupplung 10 weist ferner einen Aktuator 2 auf, der zur Aufbringung einer geregelten Tangentialkraft auf zumindest eines der Schlingfederenden 7 bzw. 8 entgegen der Wickelrichtung der Schlingfeder 3 vorgesehen ist. Durch das Vorsehen dieses Aktuators 2 und seiner Wirkung auf das bzw. die Schlingfederenden 7 bzw. 8 entgegen der Wickelrichtung wird erreicht, dass die Drehmomentübertragung der erfindungsgemäßen Schlingfederkupplung 10 regelbar ist, da durch die Regelbarkeit der Aufbringung der Tangentialkraft im Gegensatz zu bisher bekannten Schlingfederkupplungen mit reiner An-/Aus-Funktion auch Zwischenzustände erreichbar sind, in denen die Schlingfeder 3 gezielt Schlupf zulässt, was die Regelung des zu übertragenden Drehmomentes möglich macht.

Hierzu können die Kontaktflächen der Schlingfeder 3 und der ersten Welle 4 wahlweise ohne oder mit gleicher oder unterschiedlicher Beschichtung versehen sein. Diese Beschichtungen können vorzugsweise aus Papier, Karbon, Sintermaterialien oder Molybdän bestehen.

Wie zuvor bereits erläutert wurde, kann die zweite Welle 1 über die Schlingfeder 3 mit der ersten Welle 4 über ein regelbares Drehmoment in Verbindung gebracht werden.

Der über der zweiten Welle 1 angeordnete Aktuator 2 kann beispielsweise in Form eines elektrischen Stellmotors ausgeführt werden. Vorzugsweise kann der Aktuator 2 bei einer Ausführungsform der erfindungsgemäßen Schlingfederkupplung mit einer Drehrichtung auf das entsprechende Schlingfederende 7 bzw. 8 entgegen der Wickelrichtung eine geregelte Kraft in tangentialer Richtung ausüben. Bei einer ebenfalls denkbaren Ausführungsform mit wählbarer Drehrichtung kann der Aktuator das entsprechende Schlingfederende 7 bzw. 8 mit einer geregelten Kraft belasten.

Die Funktionsweise der erfindungsgemäßen Schlingfederkupplung 10 ist wie folgt:

Über die Welle 4 wird ein Drehmoment eingeleitet. Abhängig von der Drehrichtung kommt die Welle 1 mit einer Fläche der Ausnehmung an einem der beiden Schlingfederenden 7 bzw. 8 zur Anlage und es baut sich eine Kraft auf, die in Fig. 2 mit den Pfeilen 5A bzw. 5B gekennzeichnet ist. Durch diese Kraft wird die Schlingfeder 3 zugezogen. Die Schlingfeder 3 kommt hierbei an ihrem Innendurchmesser auf der Welle 4 zur Anlage. Aus der Reibungskraft zwischen der Welle 4 und der Schlingfeder 3 resultiert das übertragene Drehmoment und gleichzeitig eine mit dem übertragenen Drehmoment zunehmende Anpressung der Schlingfeder 3 mit entsprechend zunehmender Reibkraft. Ohne Einsatz des Aktuators 2 stellt sich das Drehmoment durch Selbstverstärkung auf das Maximaldrehmoment der Schlingfederkupplung 10 ein.

Grundsätzlich sind folgende Ausführungen der erfindungsgemäßen Schlingfederkupplung 10 denkbar:

Der Aktuator 2 kann mit der Welle 1 rotieren. Das Drehmoment wird mit dem Aktuator 2 geregelt, indem dieser das freie Schlingfederende 7 bzw. 8 mit einer geregelten Kraft (Pfeile 6A bzw. 6B in Fig. 2) beaufschlagt. Auf diese Weise wird die Schlingfeder 3 entlastet und das übertragbare Drehmoment reduziert. Die Bestimmung der Stellkraft und damit das übertragbare Drehmoment kann als feste Stellgröße vorgegeben werden.

Bevorzugterweise ist der Aktuator 2 in ein Regelsystem integriert, das in die Fig. 2 und 3 durch den Block 9 symbolisiert ist. Das Drehmoment wird dann in Abhängigkeit geeigneter Parameter, z.B. des Radschlupfes oder der Drosselklappenstellung bei Kraftfahrzeugen, direkt oder indirekt vorgegeben.

Eine zweite denkbare Ausführungsform der erfindungsgemäßen Schlingfederkupplung 10 entspricht in ihrer prinzipiellen Funktionsweise der zuvor erläuterten ersten Ausführungsform. Der Aktuator 2 ist bei dieser Ausführungsform an einem in den Fig. 2 und 3 nicht näher dargestellten Gehäuse befestigt. Das Drehmoment wird mit dem Aktuator 2 geregelt, indem dieser das jeweils freie Schlingfederende 7 bzw. 8 mit einer geregelten Kraft 6A bzw. 6B beaufschlagt. Auf diese Weise wird die Schlingfeder 3 entlastet und das übertragbare Drehmoment reduziert. Dazu wird ein in den Fig. 2 und 3 nicht näher dargestelltes Druckelement des Aktuators 2 gegebenenfalls dem entsprechenden Schlingfederende 7 bzw. 8 nachgeführt. Auf diese Weise lässt sich je nach Anforderung auch direkt ideal die Drehzahl regeln.

Bei einer dritten denkbaren Ausführungsform der erfindungsgemäßen Schlingfederkupplung 10 entspricht deren prinzipielle Funktionsweise wieder den Ausführungsformen 1 und 2. Bei dieser Ausführungsform kann jedoch der Aktuator 2 in die Welle 4 integriert werden. Auch bei dieser Ausführungsform wird das Drehmoment mit dem Aktuator 2 geregelt, indem dieser wiederum das jeweils freie Schlingfederende 7 bzw. 8 mit der geregelten Kraft 6A bzw. 6B beaufschlagt. Auch bei dieser Ausführungsform wird auf diese Weise die Schlingfeder 3 entlastet und das übertragbare Drehmoment reduziert. Das auch bei dieser Ausführungsform vorgesehene Druckelement des Aktuators 2 wird gegebenenfalls dem entsprechenden Schlingfederende 7 bzw. 8 nachgeführt. Somit kann auch bei dieser Ausführungsform, je nach Anforderung, auch direkt ideal die Differenzdrehzahl zum Motor, vorzugsweise Verbrennungsmotor, geregelt werden.

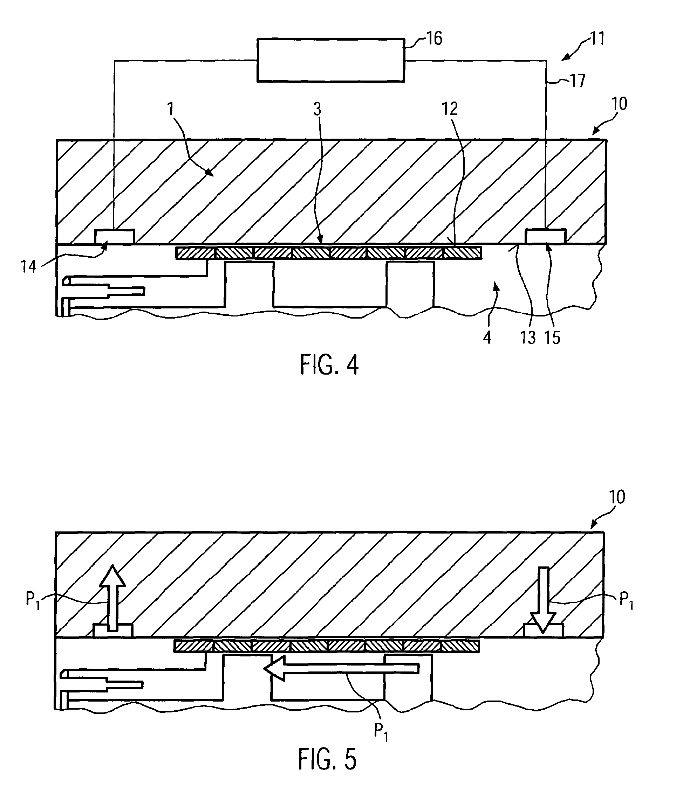

In Fig. 4 ist ein vergrößerter Ausschnitt der erfindungsgemäßen Schlingfederkupplung 10 in schematisch stark vereinfachter Weise dargestellt, der eine Ölumlaufschmierung 11 zeigt, die eine Fördereinrichtung, insbesondere in Form einer Ölpumpe 16 umfasst, die in einem Ölkreislauf 17 angeordnet ist. Der Ölkreislauf 17 ist mit Ölzulaufnuten 14 und 15 verbunden, über die Öl zum Zwecke der Kühlung der Reibpartner, insbesondere der Anlagefläche 12 der Schlingfeder 3 und der Gegen- bzw. Reibfläche 13 eingeleitet werden kann.

Die Schlingfeder 3, deren Anlagefläche 12 auf die einzelnen Windungen verteilt ist, wird, wie zuvor bereits erläutert, von der inneren Welle bzw. dem Federträger 4 angetrieben und über einen in Fig. 4 nicht näher dargestellten Mechanismus aufgespreizt und dadurch an die zweite hohle Welle bzw. die Trommel 1 angelegt, wodurch ein Reibmoment und damit Reibwärme erzeugt wird. Die Reibwärme wird über das durch die Ölumlaufschmierung 11 zugeführte Öl abgeführt.

Die hierfür möglichen Ölflüsse sind in den Fign. 5 bis 7 durch die dort jeweils eingezeichneten Pfeile P1, P2 bzw. P3 verdeutlicht.

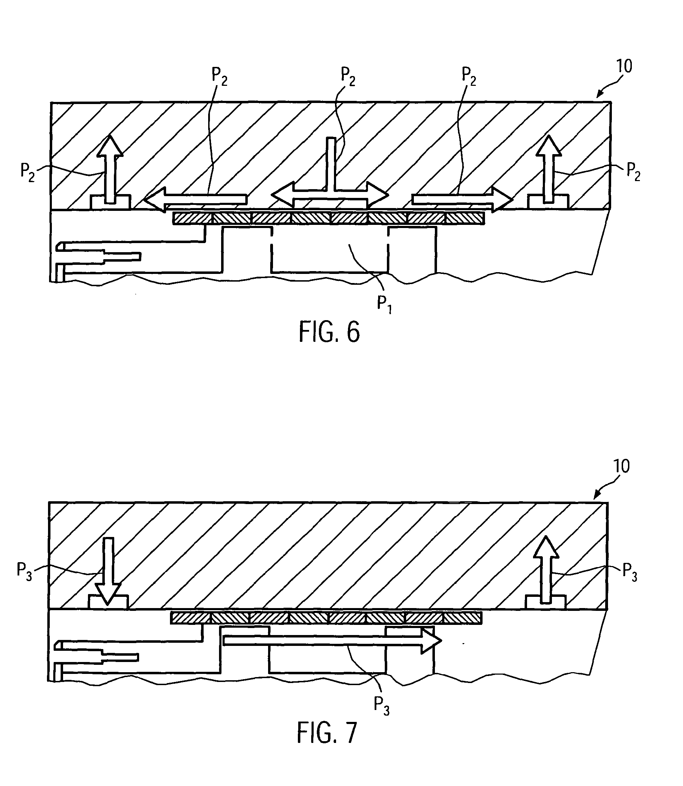

Bei der Ausführungsform gemäß Fig. 6, bei der das Kühlöl in der Mitte der Kupplung zugeführt wird, kann dabei das Öl durch eine Bohrung oder auch durch eine zusätzliche Nut in die Schlingfederkupplung 10 eintreten, wobei diese Nut jedoch in Fig. 6 nicht dargestellt ist. Eine weitere Verbesserung des Ölflusses innerhalb der Schlingfederkupplung 10 kann dadurch erreicht werden, dass in der ersten Welle 4 und/oder der zweiten Welle 1 weitere spezielle Nuten an geeigneter Stelle eingebracht werden. Auch für die Schlingfeder, die unter Umständen mit Reibbelägen versehen ist, sind zur Verbesserung der Kühlwirkung jedwede Art von geeigneten Nutformen möglich.

Neben der schriftlichen Offenbarung der Erfindung wird hiermit explizit auf deren zeichnerische Darstellung in den Fig. 1 - 5 Bezug genommen.

### Bezugszeichenliste

- 1: Zweite hohle Welle
- 2: Aktuator
- 3: Schlingfeder
- 4: Erste Welle
- 5A, 5B: Kraftpfeile
- 6A, 6B: Kraftpfeile
- 7, 8: Schlingfederenden
- 9: Regeleinrichtung
- 10: Schlingfederkupplung
- 11: Ölumlaufschmierung
- 12: Anlagefläche
- 13: Reibfläche
- 14, 15: Nuten
- 16: Fördereinrichtung (Förderelement), insbesondere Ölpumpe
- 17: Ölkreislauf
- P1, P2,: P3 mögliche Flussrichtungen des Kühlöls
- A: Schlingfeder
- B: Fixierte Achse
- A1, A2: Federenden
- C, D: Segmente

## Patentansprüche

1. Schlingfederkupplung (10)
- mit einer ersten Welle (4);
- mit einer Schlingfeder (3), die um die erste Welle (4) in einer Wickelrichtung herumgewickelt ist und zwei Schlingfederenden (7, 8) sowie eine Anlagefläche (12) zum Zusammenwirken mit einer Reibfläche (13) aufweist; und
- mit einer zweiten hohlen Welle (1), die konzentrisch zur ersten Welle (4) um die Schlingfeder (3) herum angeordnet ist;
**gekennzeichnet durch**
- einen Aktuator (2) zur Aufbringung einer geregelten Tangentialkraft auf zumindest eines der Schlingfederenden (7, 8) entgegen der Wickelrichtung der Schlingfeder (3) und
- eine Ölumlaufschmierung (11), die eine Fördereinrichtung (16) aufweist, die der Anlagefläche (12) und der Reibfläche (13) über einen Ölkreislauf (17) Kühlöl zuführt und erwärmtes Kühlöl abführt.

2. Schlingfederkupplung nach Anspruch 1, **dadurch gekennzeichnet, dass** die Kontaktflächen zwischen der Schlingfeder (2) und der ersten Welle (4) mit einer Beschichtung gleicher oder unterschiedlicher Materialien versehen ist.

3. Schlingfederkupplung nach Anspruch 2, **dadurch gekennzeichnet, dass das** Beschichtungsmaterial organisches Reibmaterial, Karbon, Sinter, Streusinterreibmaterial oder Molybdän ist.

4. Schlingfederkupplung nach einem der Ansprüche 1 bis 3, **dadurch gekennzeichnet, dass** der Aktuator (2) in Form eines elektrischen Stellmotors ausgebildet ist, oder dass der Aktuator (2) eine pneumatische, hydraulische, Piezo- oder Magnet-Vorrichtung ist.

5. Schlingfederkupplung nach einem der Ansprüche 1 bis 4, **dadurch gekennzeichnet, dass** die zweite hohle Welle (1) eine Ausnehmung derart aufweist, dass die zweite Welle (1) nur in Wickelrichtung der Schlingfeder (3) gegen sich in entgegengesetzte Richtungen radial erstreckende Schlingfederenden (7, 8) stoßen kann.

6. Schlingfederkupplung nach einem der Ansprüche 1 bis 5, **dadurch gekennzeichnet, dass** sich der Aktuator (2) entweder gegen eine der beiden Wellen (1 bzw. 4) oder gegen ein feststehendes Gehäuseteil abstützt.

7. Schlingfederkupplung nach einem der Ansprüche 1 bis 6, **dadurch gekennzeichnet, dass** der Aktuator (2) an einem Kupplungsgehäuse angeordnet ist.

8. Schlingfederkupplung nach einem der Ansprüche 1 bis 7, **dadurch gekennzeichnet, dass** der Aktuator (2) in der ersten Welle (4) integriert ist.

9. Schlingfederkupplung nach einem der Ansprüche 3 bis 8, **dadurch gekennzeichnet, dass** das Beschichtungsmaterial als segmentierter Belag ausgebildet ist.

10. Schlingfederkupplung nach einem der Ansprüche 3 bis 9, **dadurch gekennzeichnet, dass** das Beschichtungsmaterial als genuteter Belag ausgebildet ist.
